Europäisches Patentamt

European Patent Office

Office européen des brevets

(11) Publication number: **0 245 221**
A2

# EUROPEAN PATENT APPLICATION

(21) Application number: 87830159.7

(22) Date of filing: **29.04.87**

(51) Int. Cl.⁴: **B 62 K 21/02,** B 62 K 25/08

(30) Priority: 09.05.86 IT 8361986

(43) Date of publication of application: 11.11.87
Bulletin 87/46

(84) Designated Contracting States: DE NL SE

(71) Applicant: SPECIAL FORKS S.r.l., Via Fanti, 2,
I-20022 Castano Primo (IT)

(72) Inventor: Ceriani, Enrico, Via Pagani, 16/18,
I-21048 Solbiate Arno (IT)
Inventor: Ceriani, Marco, Via Pagani, 16/18,
I-21048 Solbiate Arno (IT)

(74) Representative: Pellegri, Alberto et al, c/o Società
Italiana Brevetti S.p.A. Via Cavour, 9, I-21100 Varese (IT)

(54) **Motorcycle's fork.**

(57)  Described is a front, fork type, suspension for motor-
cycles utilizing a single, centrally mounted, shock absorber
between the head crown and an arched bracket joining the
two stress tubes slideable inside two cylinders mounted in
the relative clamps of the head crown and of the base crown.
The new fork offers a number of advantages in respect of the
forks of the prior art; an increased rigidity and resistance to
flection, coupled to a reduction of the mobile weights of the
suspension are only some of the advantages.

ACTORUM AG

"MOTORCYCLE'S FORK"

The present invention relates generally to motorcycles and, in particular, to a front fork for motorcycles with improved characteristics and performances with respect to motorcycle forks of the prior art.

Whenever high performances are sought from road race and dirt track motorvehicles, suspensions assume a primary importance. This is even more so in the case of two wheels vehicles (motorcycles), wherein static trim and dynamic characteristics of the suspensions have a decisive influence upon the stability of the vehicle during braking and in other conditions of strong exertion of the suspensions.

Particularly the front suspension of a motorcycle, almost universally of the fork type, must satisfy several requirements and react correctly to a number of different mechanical stresses as it constitutes a fundamental structural member of the motorcycle having several functions. It constrains the front wheel, allows steering it, absorbes and dampens impacts and vertical displacements of the wheel imposed by irregularities of the pavement, moreover it determines substantially the longitudinal trim (inclination) of the motorcycle's and rider's mass in the different situations which are encountered on riding.

Solely for making easier and more immediate understanding the following discussion of the prior art and of its drawbacks as well as the description of the fork of the present invention and of its advantageous aspects, hereinafter reference will be frequently made to certain constructive features of a typical example of fork type suspension for motorcycle made in accordance with the prior art's techniques and to an embodiment of the fork of the present invention so as shown in the annexed drawings, wherein:

Figure 1 is a partially sectional, side view of a motorcycle's fork of the prior art;

Figure 2 is a front view of the same fork of Fig. 1;

Figure 3 is a plan view of the fork of the preceding figures;

Figure 4 is a partially sectional, side view of a motorcycle's fork made in accordance with the present invention;

Figure 5 is a front view of the fork of Fig. 4;

Figure 6 is an enlarged portion of Fig. 4.

These drawings are purely illustrative and the invention should not be construed limited to the particular embodiment shown.

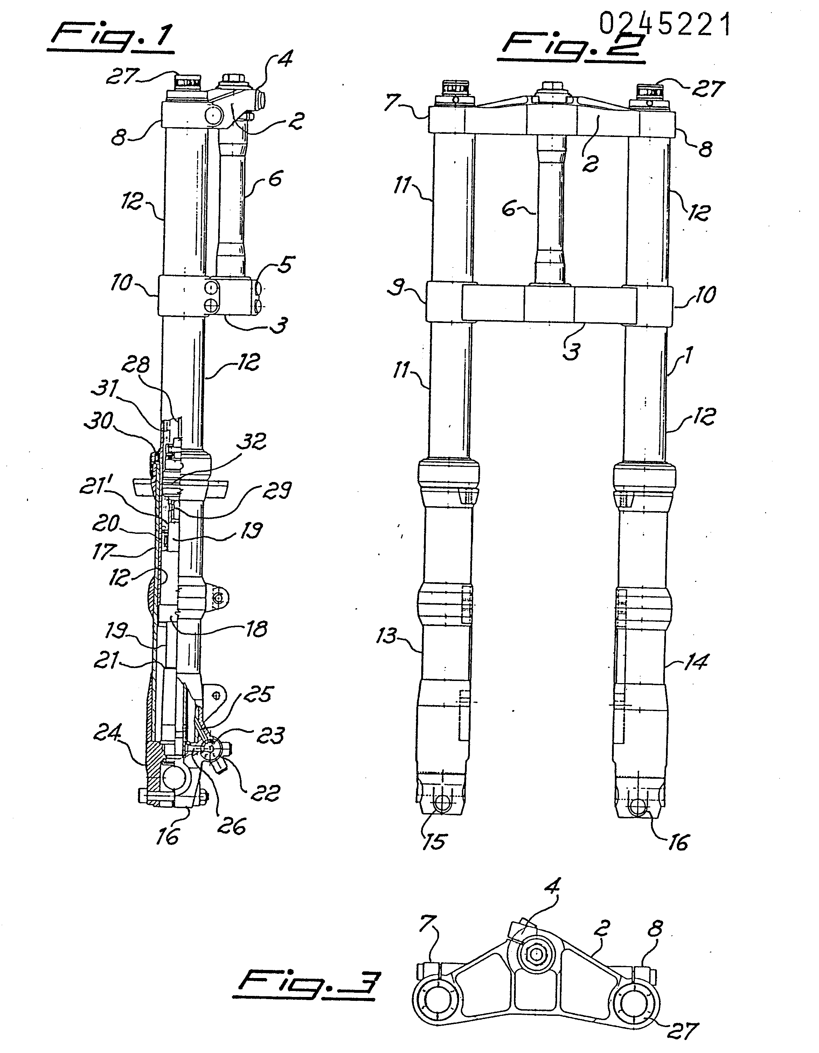

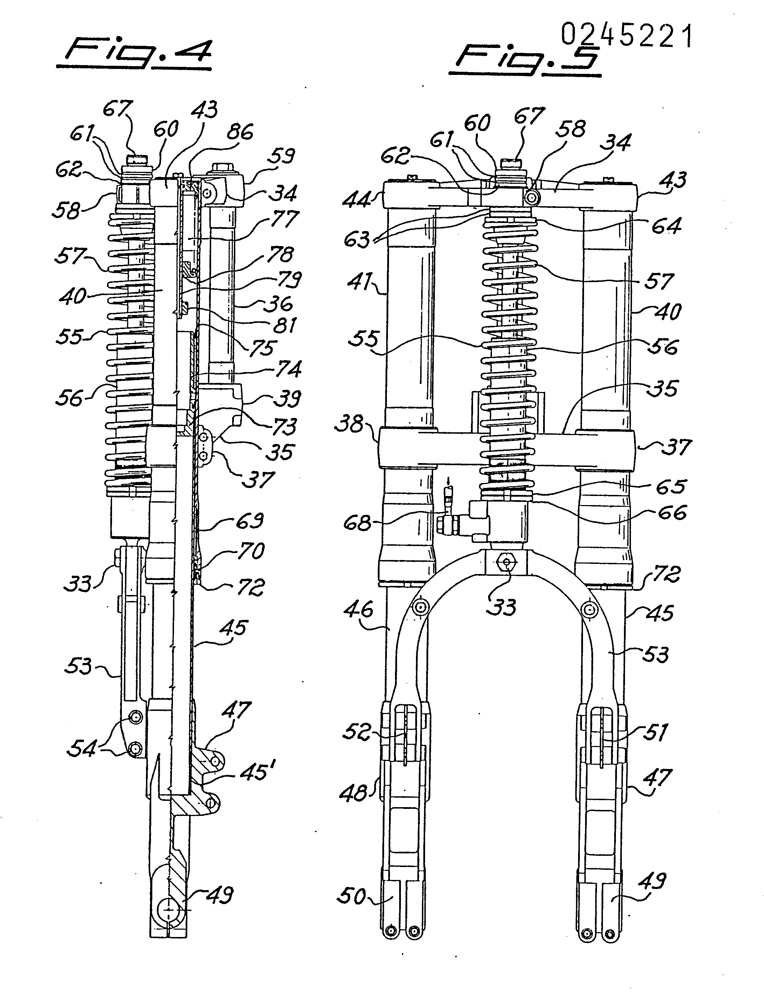

Through a long process of refinement, the most popular motorcycles'forks have, nowadays, a structure similar to the one shown in Figures 1, 2 and 3.

As it may be easily observed, the fork, indicated in its entirety with 1, comprises two transverse members 2 and 3, usually made by casting, commonly called, respectively, "top or head crown" (2) and "bottom or base crown" (3), which are fixed by means of relative clamps 4 and 5, respectively, to the top end and to the bottom end of a steel steering pin 6.

The two crowns 2 and 3 are provided with two lateral clamps, 7 and 8, and 9 and 10, respectively, forming two coaxial pairs, 7 and 9, and 8 and 10, through which the two fork tubes 11 and 12 are clamped.

The devices for damping the excursions of the two telescopic arms of the fork are two identical hydraulic shock absorbers 13 and 14, located in the lower part of

two stress tubes and provided, at their bottom end, with a clamp (15 and 16) for retaining the axle of the motorcycle's front wheel (not shown).

As it may be observed in the sectioned portion of Fig. 1, each telescopic, double-effect, oleodynamic shock absorber is essentially formed by a cylinder 17, inside which slides the terminal part of the stress tube 12 whose extremity is engaged with the piston 18 of the oil pump of the shock absorber which, in turn, slides over a coaxial tubolar member 19 on the surface of which acts the wiper ring 20, assembled on the top end of the piston 18.

In the compression phase of the suspension, the oil, compressed by the cylinder 18 in the lower chamber 21 of the cylinder 17, flows into the top chamber 21' through suitable valves or orifices producing the desired damping action of the shock absorber.

A multiposition, damping adjustment device, indicated in its entirety with 22, is often present for enabling adjustment of the damping hydraulic action during the compression phase of the suspension. In fact, the diameter of the orifice for the oil flow from the lower chamber 21 to the top chamber 21' may be varied by changing the orientation of a hollow body 23, suitably fitted into an appendix of the lower closing plug 24 of the cylinder 17 and provided with a series of radial ports of different diameter which may be positioned in correspondence of the two flow channels 25 and 26 of the oil.

During the extension or return phase of the suspension, the adjustment of the hydraulic damping action, which in this case will normally be lesser than the damping action exerted during the compression phase, may be effected by acting on a knurled nut 27 of the rod 28 extending coaxially inside each of the two fork's tubes, in order to rotate an adjustment element (shutter) 29 for modifying the orifices for the efflux (return) of the oil.

In the cutaway portion of the figure, is also visible a oil seal gasket 30 where the stress tube 12 engages the cylinder 17 housing the oil pump of the shock absorber.

The elastic element of the suspension is constituted by the springs 31, contained inside the stress tubes, abutting upon the top surfaces of the respective assembly blocks of the shock absorber, indicated in their entirety with 32 in the cutaway portion of Fig. 1.

No other construction details of the two shock absorbers are herein described because they are well known under all aspects to the expert technician of the field.

Though the forks of such a known configuration are reliable and satisfactory under many aspects, they show some limitations to the quest of ever improved performances of the sospension tending to an ideal dynamic behaviour of the suspension itself.

Firstly, the major part of the mass of the fork is mobile and contributes in an important way to increase the total mobile mass composed of the weight of the front wheel and of the mobile parts of the suspension and, therefore, to increase the system's inertia making more problematic to achieve a most favorable behaviour of the suspension under all circumstances.

Secondly, the two stress tubes, which must withstand remarkable flexural stresses as well as the oscillations being induced upon the front wheel and upon the mobile parts of the suspension during the ride, are necessarily clamped into the clamps of the base crown piece in a somewhat high position in order to accomodate for the working stroke of the telescopic system of the suspension besides the length (encumbrance) of the shock absorbers themselves. In order to determine a sufficient flexural resistance and an appropriate resistance to "twisting", i.e. to torsional stresses acting on the pair of tubes forming the fork, the stress tubes are often "over dimensioned" and high tensile strength steels are almost exclusively employed.

A further disadvantage is due to the fact that substantially all adjustments of the suspension are duplicated, i.e. repeated upon the two arms of the fork, this for what concerns the adjustment of the springs as well as for what concerns hydraulic adjustments of the two shock absorbers, and it is often difficult to ensure a perfect balance of the dynamic characteristics of the two distinct assemblies.

Even the proposal of "inverting" the fork, i.e. of clamping the two telescopic shock absorber's bodies into the clamps of the fork crowns instead of clamping the stress tubes with an aim of reducing the mobile mass of the suspension, has not encountered much favour on the part of motorcycle manufacturers, because such a type of fork, besides being more complicated and costly, does not bring about a sustantial reduction of the mobile mass, besides failing to appreciably increase the rigidity and resistance to flexural stresses of the fork.

It is a main objective of the present invention to provide a motorcycle's fork with improved characteristics with respect to the forks of the known art and substantially free of the drawbacks exhibited by the latters.

The fork of the invention allows, in fact, to minimize the mobile weights (mass) of the suspension though reducing, at the same time, the lenght of the torque arms of the forces acting upon the fork and greatly stiffening the fork.

These and other objectives and advantages, so as will become evident through the following description, are obtained by means of the motorcycle's fork of the present invention, which comprises a head crown and a base crown assembled, respectively, on the top and bottom end of a steering pin, and which provide two pairs of coaxial clamps, respectively, for two telescopic elements, forming the fork, which are provided, at their lower end, with anchoring means for clamping the axle of the front wheel and means for damping the excursions of said telescopic elements and which is characterized by comprising:

a) a single shock absorber, mounted frontally and essentially centrally between said head crown and a substantially rigid bracket joining two stress tubes of said two telescopic elements;

b) two tubolar members, mounted, respectively, in said two pairs of coaxial clamps of the head crown and of the base crown, and inside which slide said stress tubes;

the top end of said stress tubes, constituting a reaction point to flexural stresses acting in correspondence of said wheel's axle, sliding inside said tubolar members between two limit positions both contained between said coaxial clamps of the head crown and of the base crown.

In this way, a susbtantial reduction of the mobile weights of the suspension is achieved because, substantially, only in the weight of the stress tubes and of the bracket connecting them contributes to the total mobile mass of the suspension. Furthermore, by virtue of the fact that the lenght of the torque arms may be greatly reduced with respect to that of the known forks, the stiffness of the system is, comparatively, much greater than that of the traditional forks. As will emerge from the detailed description which follows, the same stress tubes may be sensibly lightened in respect of those necessarily sturdier of the known forks achieving a further reduction of the inertia of the system. The presence of the bracket contributes to increase further the fork's resistance to twisting. To these aspects and advantages relative to purely mechanical characteristics, the fork of the present invention adds a series of other nonsubordinate features and advantages.

The adjustments of the suspension, both of the elastic element (spring) and of the hydraulic (damping) part, are unitary thus eliminating the possibility of unbalances between the parallel adjustments of the traditional forks. Furthermore, the suspension lendsitself to implement systems for varying the longitudinal static trim of the motorcycle extremely simple and quick to intervene upon. According to a particularly preferred embodiment of the fork of the invention, it is also possible and extremely simple to embody a secondary elastic element which intervenes in proximity of the end of stroke (compression) of the suspension permitting to easily optimize the elastic reaction characteristic of the suspension along the entire stroke.

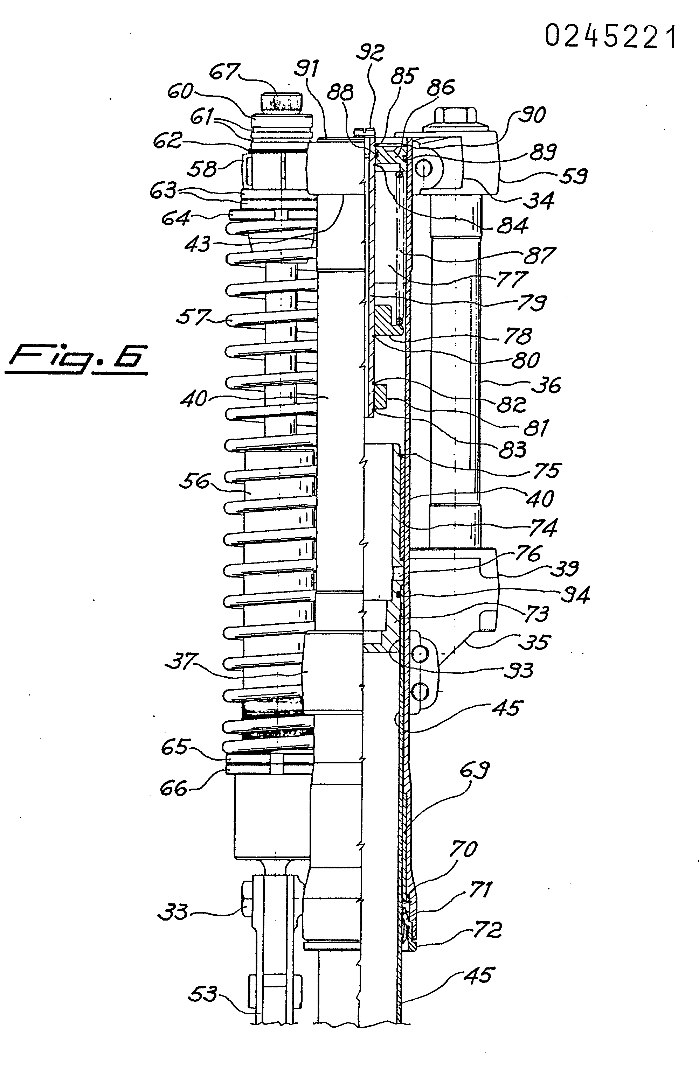

The description proceeds to illustrate a particularly preferred embodiment of the fork of the invention as shown in the annexed figures 4, 5 and 6.

In accordance with such an embodiment, the fork comprises a head crown 34 and a base crown 35 clamped, respectively, at the top and bottom end of a steering pin 36 in a customary way.

The base crown 35 has preferably a shape such that the position of the two lateral clamps 37 and 38 for clamping the telescopic elements of the suspension, is sensibly lower than the position of the central clamp 39 clamped on the steering pin 36.

Two tubolar elements (cylinders) 40 and 41 are mounted in the respective pairs of coaxial clamps 37 and 43, and 38 and 44, of the base crown and of the head crown.

Two stress tubes 45 and 46 slide, respectively, inside said tubolar elements 40 and 41, and extend downwards outside of the tubolar elements 40 and 41 and screw, by means of the threaded end 45', on relative suitable lower legs or end pieces 47 and 48, comprising means 49 and 50 for accommodating and fixing the two ends of a front wheel's axle (not shown) and means 51 and 52 for anchoring the two ends of an arched bracket 53 by means of the bolt pairs 54.

Between the vertex of said arched bracket 53 and the head or top crown 34, is mounted, in a front and essentially central position, by means of the bolt 33 and of the clamp 58, the single shock absorber 56 of the suspension, which is indicated in its entirety with 55.

The type and shape of the dynamic components of the suspension may be different. In the example shown in figures 4, 5 and 6, the suspension comprises a shock absorber 56 which may be of the telescopic, double effect, oleodynamic type or of the telescopic, oleo-pneumatic type or of other types yet, positioned internally of an elastic reaction spring 57.

The head crown 34 of the fork of the invention is suitably provided with such a fourth clamp 58 in a central position, advanced with respect to the clamp 59 of the steering pin, for anchoring a terminal 60 of the piston's rod of the shock absorber 56. Preferably, the rod's terminal 60 of the piston of the shock absorber is provided with a series of circular seats, in order to permit, by inserting a stop (Seeger) ring 62 into one or the other of said seats, a primary adjustment of the static longitudinal trim of the motorcycle by shortening or elongating the suspension.

The spacers 63 and the threaded knurled rings 64, 65 and 66, permit to adjust the pre-loading force of the reaction spring 57 and, therefore, also the definitive longitudinal static trim of the motorcycle.

The damper (shock absorber) 56 will be advantageously provided with hydraulic adjustment devices similar to those described already in relation to the discussion of the shock absorbers of the conventional forks of Fig. 1. In figures 4, 5 and 6, is readily visible the knurled nut 67 for the adjustment of the damping action of the shock absorber during the extension (return) of the suspension. Moreover, the shock absorber may be also furnished with an antidive device which intervenes to increase the resistance presented by the hydraulic system of the damper to the compression of the suspension when the front brake is acted upon, in order to avoid an eccessive "diving" of the front suspension during braking. In Fig. 5, is in fact indicated a special hydraulic connection 68 with the actuation hydraulic system of the front brake.

Such different hydraulic adjustment devices of the damping performance of the oleodynamic shock absorber both during the compression phase and during the extension or return phase of the suspension are well known to the expert technician of the field and, therefore, a reiterated detailed description of such adjustment devices is not deemed necessary for an adequate comprehension of the present invention as well as for its reduction to practice.

As it may be observed in the cutaway portion of Fig. 4, and better still in the enlarged partial view of Fig. 6, the stress tube 45 slides inside the tubolar element 40. Most conveniently, such a cylinder is provided, in correspondence of its terminal lower part, with a cylindrical insert 69 of antifriction metal fixed in its proper seat by a number of screws 70. An oil seal gasket 71, retained by the ring 72, completes the terminal part of the cylinder 40. The top end of the stress tube 45 is threadedly engaged to a cylindrical "cup" terminal 73. A cylinder of antifriction metal 74 is inserted over the top portion of the terminal 73 and locked in its seat by a stop ring 75. A series of radial holes 76, drilled through the wall of the terminal 73, distribute lubricating oil, contained inside the cup terminal 73, along the slide wall of the cylinder 40.

According to a particularly preferred embodiment of the invention, inside the top portion of both the slide cylinders 40 and 41, is lodged a cartridge type spring, indicated in its entirety with 77 in the cutaway portion of figures 4 and 6.

Each of the two identical cartridge springs is provided of a bottom flange 78 capable of sliding over a central assembly and guide cylinder 79 and stopped by a Seeger ring 80. The guide cylinder 79 is conveniently provided with a lower stop 81, mounted by means of two stop rings 82 and 83, and to the top end of the cylinder is fixed, by means of two stop rings 84 and 85, the top flange 86 of the cartridge assembly 77. Therefore, the spring 87 may be compressed between the two flanges 78 and 86.

In order to avoid expulsion of lubricating oil from inside the slide cylinders, on the cylindrical surfaces of the top flange 86 of the cartridge assembly are suitably formed seats for accommodating two "O ring" type gaskets 88 and 89.

Upon inserting the cartridge assembly inside the slide cylinder, the cartridge is pushed inside until the top flange 86 reaches the preset seat inside the slide cylinder, i.e. until the lowermost edge of the flange 86 abuts upon a "step" of the internal cylindrical surface of the slide cylinder representing the end of the seat obtained by suitably boring out the top terminal portion of the slide cylinder.

The cartridge assembly is thence locked at the top by a stop (Seeger) ring 90 for interiors, placed inside an appropriate seat formed on the internal surface of the bored-out wall of the slide cylinder.

A cover 91 rests on the top surface of the stop ring 90 and is locked by a threaded plug 92, which permits also to introduce lubricating oil inside the cup terminal 73 of the stress tube. Finally, in order to avoid losses of lubricating oil through the threaded joint 93 between the stress tube and its terminal piece, an "O ring" gasket 94 may be used as shown in Fig. 6.

During the compression phase of the suspension, the top end of the terminal 73 of the stress tube 45 will engage the lower flange 78 of the cartridge spring 77 when the compression stroke approaches the maximum displacement (end of stroke).

In this way, the elastic reaction force of the two cartridge springs inserted inside the two slide cylinders of the stress tubes, adds to the elastic reaction force of the primary spring 57 of the suspension in proximity of the end of stroke.

Being permitted to count upon the combined action of two supplementary cartridge springs at the end of stroke, allows more freedom in dimensioning the primary spring of the suspension and greater possibilities of adjusting the pre-loading force of the primary spring.

In fact, in conventional forks the choice of the springs and their pre-loading must take into account, besides the elastic requirements in correspondence of the first part of the stroke of the suspension, also the elastic characteristics required in proximity of the end of the stroke. This situation necessarily imposes delicate compromises on the adjustments. Viceversa, with the fork of the present invention, a supplementary (corrective) elastic reaction may be supplied, in proximity of the end of stroke, by supplementary cartridge springs which may be housed inside the two slide cylinders of the stress tubes of the fork.

This essentially permits to adopt a main or primary spring with a "softer" (i.e. more gradual) elastic characteristic and enjoy the advantage of a wider range of initial elastic adjustments.

The adjustment possibilities are, from a practical view point, still incremented by the ease with which such cartridge springs, naturally carefully calibrated, may be replaced inside the two slide cylinders simply by unscrewing the two covers 91 and extracting the two stop Seeger rings. As it appears evident by simply observing the figures, a principal reaction point to flexural moments acting on the fork is identifiable with the contact areas between the extremities of the stress tubes, represented by their respective terminals (one of which is indicated in its entirety with 73 in Fig. 4) and the internal walls of the slide cylinders. Such a point is advantageously comprised, in all instances, between the two anchoring clamps of the cylinders themselves. In this way, a great resistance and rigidity is ensured with tubes' cross sections relatively small. Furthermore, in contrast to the conventional forks, in the fork of the invention, the "encumbrance" of the shock absorber does not interfere with the working stroke of the telescopic system of the suspension. In this way, the position of the clamps of the base crown may advantageously be lowered so as the two slide cylinders may extend for a certain length, which may be of considerable amount, below the clamps of the base crown piece.

The attendant possibility of readily reducing the length of the torque arms acting on the fork as well as the increased rigidity of the structure, the latter being incremented also by the presence of the arched bracket connecting the two stress tubes, make the fork of the invention extremely sturdy and resistant both to flection and to twisting.

Considering that such important advantages are accompanied by a drastic reduction of the mobile weights of the whole suspension, it may be easily understood that the fork type suspension of the present invention is capable of performances with no doubt improved in respect of those obtained with forks of conventional type.

Although emphasis has been laid on a particularly preferred embodiment of the fork of the present invention, it is intended that modifications and variations may be made by the expert technician of the field based upon the knowledge of the present specification, though remaining within the scope of the present invention so as defined in the annexed claims.

CLAIMS

1. A motorcycle's fork comprising a head steering crown and a base steering crown mounted, respectively, on the top and bottom ends of a steering pin, and which provide two pairs of coaxial clamps for clamping, respectively, two telescopic members forming the fork, at the lower end of which means are provided for anchoring the axle of the front wheel, and further comprising means for damping excursions of said telescopic members,

characterized by comprising:

a) a single shock absorber, mounted frontally and essentially centrally between said head crown and a bracket joining two stress tubes of said two telescopic members;

b) two tubolar members, mounted, respectively, in said two pairs of coaxial clamps of the head crown and of the base crown, constituting two slide cylinders of said two stress tubes;

the top end of said stress tubes, constituting a reaction point to flexural stresses acting in correspondence of said front wheel's axle, sliding inside the relative tubolar members between two limit positions both contained between the head crown's clamp and the base crown's clamp of said coaxial pairs.

2. The motorcycle's fork according to claim 1, wherein the elevation position of said clamps of the base crown is substantially lower than the lowermost portion of said steering pin.

3. The motorcycle's fork according to claim 1, wherein said slide tubolar members of said stress tubes extend by a certain distance from said clamps of the base crown.

4. The motorcycle's fork according to claim 1, wherein said bracket has an arched shape and each of its extremities is connected to the respective stress tube at a substantially intermediate position between said front wheel's axle and the lower end of said slide tubolar members.

5. The motorcycle's fork according to claim 1, wherein said shock absorber is provided with a single primary spring and with relative pre-loading rings for adjusting the longitudinal static trim of the motorcycle and wherein in the upper portion of both said tubolar members, is housed a spring, said two springs being engaged and compressed by the top end of said stress tubes upon approaching their maximum stroke distance inside said tubolar members during the compression phase of the suspension.

6. The motorcycle's fork according to claim 5, wherein said springs housed in the upper portion of said tubolar members are easily replaceable, calibrated, springs for correcting the elastic characteristic of the suspension in proximity of the end of stroke.

7. The motorcycle's fork according to claim 1, wherein antifriction metal inserts are solidly fixed over slide surfaces of said stress tubes and of said slide cylinders.

8. The motorcycle's fork according to claim 7, wherein means are provided for containing and distributing lubricating oil inside said tubolar slide members.

9. The motorcycle's fork of claim 1, wherein the anchoring position of said single shock absorber on said head crown is adjustable for changing the longitudinal static trim of the motorcycle.

10. The motorcycle's fork of claim 9, wherein said adjustment of the anchoring position is implemented by inserting a Seeger's ring for exteriors in one or another of a number of seats.

_Fig.1_

_Fig.2_

_Fig.3_

0245221

## Fig.4

## Fig.5

0245221

*Fig.6*